# EUROPÄISCHE PATENTSCHRIFT

(11) **EP 2 907 366 B1**
(45) Veröffentlichungstag und Bekanntmachung des Hinweises auf die Patenterteilung: **24.07.2019**
(21) Anmeldenummer: 13776763.8
(22) Anmeldetag: 09.10.2013
(51) Int. Cl.: H05B 37/02, H02J 13/00

(54) **STEUERUNGSSYSTEM FÜR VERTEILT ANGEORDNETE VERBRAUCHER, INSBESONDERE FÜR LAMPENBETRIEBSGERÄTE, SOWIE VERFAHREN ZUR INBETRIEBNAHME DES SYSTEMS**
CONTROL SYSTEM FOR LOADS WITH A DISTRIBUTED ARRANGEMENT, MORE PARTICULARLY FOR LAMP-OPERATING DEVICES AND METHOD FOR PUTTING THE SYSTEM INTO OPERATION
SYSTÈME DE COMMANDE CONÇU POUR DES RÉCEPTEURS DISPOSÉS DE FAÇON RÉPARTIE, NOTAMMENT POUR DES APPAREILS DESTINÉS À FAIRE FONCTIONNER DES LAMPES ET PROCÉDÉ DE MISE EN OUVRE DU SYSTÈME

(30) Priorität: 11.10.2012 DE 102012218521
(43) Veröffentlichungstag der Anmeldung: 19.08.2015
(73) Patentinhaber: Zumtobel Lighting GmbH, 6850 Dornbirn (AT)
(72) Erfinder: MAYR, Gregor, 5974 Gaißau (AT)
(74) Vertreter: Thun, Clemens
(86) Internationale Anmeldenummer: PCT/EP2013/071045
(87) Internationale Veröffentlichungsnummer: WO 2014/056978

(56) Entgegenhaltungen:
- EP-A1- 0 433 527
- EP-A2- 2 046 095
- DE-A1-102010 038 792
- US-A1- 2012 143 383
- US-A1- 2012 194 352

## Beschreibung

Die vorliegende Erfindung betrifft ein Verfahren zur Inbetriebnahme eines Steuerungssystems für mehrere verteilt angeordnete Verbraucher, wobei es sich bei den Verbrauchern insbesondere um Lampenbetriebsgeräte handeln kann. Des Weiteren betrifft die Erfindung ein Verfahren zur Inbetriebnahme eines derartigen Steuerungssystems.

Moderne und komplexe Gebäude verfügen über umfangreiche Mittel zur Steuerung und Kontrolle der Einrichtungen des Gebäudes. Einerseits bedingt dies einen erhöhten Komfort für die Bewohner oder Benutzer, wenn möglichst viele zu koordinierenden Betriebsfunktionen durch Regelungseinrichtungen unterstützt gesteuert werden, andererseits betrifft die Ausgestaltung der Haustechnik auch die Gebäude- und Betriebssicherheit, sowie Energie- und Kosteneffizienz. Speziell in komplexen Gebäuden, wie z. B. Krankenhäusern, Flughäfen oder auch anderen öffentlichen Gebäuden sind umfangreiche regelbare Beleuchtungseinrichtungen vorgesehen. Besonders dann, wenn variabel zu nutzende Medien- oder Leitsysteme hinzukommen, ist die Frage nach flexibel und kosteneffizient veränderbaren Systemen unumgänglich.

Die Ansteuerung der einzelnen Verbraucher, beispielsweise der Lampenbetriebsgeräte eines größeren Beleuchtungssystems erfolgt mit Hilfe einer ihnen individuell zugeordnete Adresse, über die sie von der zentralen Steuereinheit angesprochen werden können. Vorzugsweise werden dabei den Lampenbetriebsgeräten sog. Betriebsadressen zugewiesen, welche unter anderem auch die Anordnung der Lichtquellen in den unterschiedlichen Bereichen des auszuleuchtenden Gebäudes berücksichtigen. Hierbei besteht ergänzend oftmals auch die Möglichkeit, die in den verschiedenen Räumen angeordneten Lichtquellen in Gruppen zusammenzufassen, welche gemeinsam von der zentralen Steuereinheit angesprochen werden können.

Steuerungssysteme für Lampenbetriebsgeräte, welche eine individuelle Ansteuerung der Geräte ermöglichen, arbeiten heutzutage oftmals gemäß dem sog. DALI (Digital Adressable Lighting Interface) Standard. Hierbei handelt es sich um eine von der Beleuchtungsindustrie entwickelte Schnittstelle zur Übermittlung von digitalen Steuerbefehlen zwischen einer zentralen Steuereinheit und verteilt angeordneten Verbrauchern. Über einen sog. DALI-Bus können dann bis zu 64 Leuchten bzw. Betriebsgeräte an einen Befehlsgeber angeschlossen werden, welche jeweils individuell adressierbar sind. Da die entsprechenden Lampenbetriebsgeräte bei ihrer Herstellung und Montage in dem Beleuchtungssystem noch keine Betriebsadresse aufweisen, muss diese im Rahmen einer Initialisierungsprozedur vergeben werden, die gemäß dem DALI-Standard wie nachfolgend erläutert durchzuführen ist.

Nach Montage aller Lampenbetriebsgeräte ohne Ansehung ihrer räumlichen Anordnung werden die Betriebsgeräte der einzelnen Leuchten zunächst an den DALI-Bus, also die gemeinsame Steuerleitung angeschlossen. Die daraufhin erfolgende Versorgung der Lampenbetriebsgeräte mit Spannung bewirkt, dass jedes Lampenbetriebsgerät für sich eine individuelle Zufallsadresse generiert. Von dem zentralen Befehlsgeber aus wird dann der Befehl erteilt, dass sich die Lampenbetriebsgeräte mit ihrer Zufallsadresse melden, wodurch - im Rahmen spezieller Algorithmen - intern bei dem Befehlsgeber eine Liste sämtlicher Geräte angelegt wird, welche auch die Information enthält, über welche Zufalls- bzw. Ursprungsadressen die Geräte jeweils kontaktierbar sind.

Da diese Zufallsadresse allerdings noch nicht die räumliche Anordnung des Lampenbetriebsgeräts berücksichtigt, wird in einem darauffolgenden Schritt den Geräten dann jeweils die für den späteren Betrieb vorgesehene Betriebsadresse zugewiesen. Dies erfolgt dadurch, dass der zentrale Befehlsgeber zunächst eine erste Zufallsadresse aufruft, was zur Folge hat, dass sich die entsprechende Leuchte identifiziert, also bspw. aufleuchtet. Nunmehr muss eine Person feststellen, in welchem Raum sich diese Leuchte befindet. Sobald die Position festgestellt wurde, erfolgt eine entsprechende Rückmeldung an die Zentrale. Eine weitere Person gibt dann den Platz und die Gruppe der sich meldenden Leuchte in das Steuergerät ein, was zur Folge hat, dass dieser Leuchte dann eine geeignete, d.h. eine die Position der Leuchte berücksichtigende Betriebsadresse zugewiesen wird. Nacheinander werden auf diese Weise sämtliche Zufallsadressen abgehandelt, bis sämtlichen Leuchten eine Betriebsadresse zugewiesen wurde. Diese wird jeweils in einem entsprechenden Speicher des Lampenbetriebsgeräts abgelegt und natürlich auch in der zentralen Steuereinheit gespeichert.

Vergleichbare Vorgehensweisen zum Zuweisen von Betriebsadressen für Lampenbetriebsgeräte in größeren Beleuchtungssystemen sind aus der EP 0 766 881 A1 oder der EP 0 433 527 A1 oder der DE 10 2010 038792 bekannt. Alle diese bekannten Verfahren beruhen auf dem Prinzip, dass die Lampenbetriebsgeräte zunächst anhand einer die Position nicht berücksichtigenden Ursprungs- oder Zufallsadresse zur Identifizierung aufgerufen werden, wobei nach Feststellen der eigentlichen Position der Leuchte dann dieser Leuchte eine neue Betriebsadresse zugewiesen wird.

Nachteilig bei diesen aus dem Stand der Technik bekannten Lösungen ist also insbesondere, dass die einzelnen Verbraucher zwar in der Lage sind, sich mit Hilfe ihrer Ursprungs- bzw. Zufallsadresse gegenüber dem zentralen Befehlsgeber zu identifizieren, derart, dass eine individuelle Kommunikation zwischen Befehlsgeber und Verbraucher möglich ist, allerdings zum Zuweisen einer sinnvollen Betriebsadresse trotz allem in einem separaten Schritt die Position jedes Verbrauchers ermittelt werden muss.

Der vorliegenden Erfindung liegt deshalb die Aufgabenstellung zugrunde, eine neuartige Möglichkeit zur Inbetriebnahme eines derartigen Steuerungssystems anzugeben, welche einfacher und schneller durchzuführen ist.

Die Aufgabe wird durch ein Verfahren zur Inbetriebnahme eines Steuerungssystems, welches die Merkmale des Anspruchs 1 aufweist, gelöst. Außerdem betrifft die vorliegende Erfindung auch ein entsprechendes Steuerungssystem gemäß Anspruch 6. Vorteilhafte Weiterbildungen der Erfindung sind Gegenstand der abhängigen Ansprüche.

Die erfindungsgemäße Lösung sieht vor, dass mit Hilfe einer Sensoreinheit eine die Position bzw. Anordnung eines Verbrauchers wiedergebende Positionsinformation ermittelt wird und diese Positionsinformation dann von der Sensoreinheit an den Verbraucher übermittelt und von diesem gespeichert wird.

Erfindungsgemäß wird deshalb ein Verfahren zur Inbetriebnahme eines Steuerungssystems für mehrere verteilt angeordnete Verbraucher, insbesondere für Lampenbetriebsgeräte vorgeschlagen, wobei mit Hilfe einer Sensoreinheit eine die Position bzw. räumliche Anordnung des Verbrauchers betreffende Positionsinformation ermittelt wird und die Positionsinformation von der Sensoreinheit an den Verbraucher übermittelt und von diesem gespeichert wird. Vorzugsweise wird hierfür die Sensoreinheit in der Nähe des entsprechenden Verbrauchers platziert und als Positionsinformation die Position der Sensoreinheit bestimmt.

Dadurch, dass erfindungsgemäß jeder Verbraucher eine seine Position betreffende Information speichert, kann das Verfahren zum Zuweisen von den Betriebsadressen drastisch vereinfacht und beschleunigt werden, wobei trotz allem im Wesentlichen auf die bislang vorgesehenen Verfahren zur Inbetriebnahme des Systems zurückgegriffen werden kann. So kann auch bei dem Verfahren bzw. bei dem System gemäß der vorliegenden Erfindung vorgesehen sein, dass alle Verbraucher sich gegenüber einem zentralen Befehlsgeber unter einer individuellen Ursprungs- oder Zufallsadresse melden. Im Rahmen dieses Identifizierens gegenüber dem Befehlsgeber kann nun allerdings vorgesehen sein, dass auch die entsprechende Positionsinformation übermittelt wird. Dabei kann entweder jeder Verbraucher nach Kontaktierung durch den Befehlsgeber über die Ursprungs- oder Zufallsadresse und entsprechender Aufforderung die Positionsinformation übermitteln oder bereits bei erstmaliger Übermittlung der Ursprungs- bzw. Zufallsadresse. Denkbar wäre sogar, dass die Positionsinformation selbst die Ursprungsadresse darstellt, da die Verbraucher in der Regel unterschiedliche Positionen aufweisen und dementsprechend über diese Positionsinformation eindeutig voneinander unterscheidbar sein sollten. Unabhängig davon, in welcher Weise das Übermitteln der Positionsinformation erfolgt, ist allerdings dann der Befehlsgeber in der Lage, jeden Verbraucher zu kontaktieren und besitzt darüber hinaus auch Kenntnis über dessen Position. Auf Basis dieser Positionsinformationen können dann - vorzugsweise automatisierte - Betriebsadressen erstellt und den Verbrauchern zugewiesen werden. Der bei den Lösungen aus dem Stand der Technik erforderliche Zwischenschritt, nämlich die Position jedes einzelnen Verbrauchers zu ermitteln, nach dem dieser durch den zentralen Befehlsgeber zur Abgabe eines optischen Signals aufgefordert wurde, kann hier also entfallen.

Die Tatsache, dass dem zentralen Befehlsgeber unmittelbar Positionsinformationen der an das System angeschlossenen Verbraucher zur Verfügung stehen, kann auch zu einer komfortableren Steuerung des Systems insgesamt genutzt werden. So kann beispielsweise der Befehlsgeber dazu ausgebildet sein, auf Basis der Positionsinformationen eine grafische Darstellung der Anordnung der Verbraucher zur Verfügung zu stellen. Auch dies war bei bislang aus dem Stand der Technik bekannten Lösungen nur äußerst aufwendig zu realisieren bzw. die entsprechenden Informationen mussten dem System manuell zur Verfügung gestellt werden. Im Vergleich dazu kann nunmehr unmittelbar durch den Befehlsgeber eine Anordnung der Leuchten dargestellt werden. Wird diese Darstellung mit zusätzlichen Informationen - z.B. Bauplänen - hinsichtlich der Ausgestaltung des Gebäudes kombiniert, kann sogar eine äußerst anschauliche und realistische Darstellung erhalten werden, durch welche der Bedienkomfort für das System nochmals wesentlich verbessert wird.

Eine andere vorteilhafte Weiterbildung der Erfindung führt dazu, dass für den Fall, dass es sich bei den Verbrauchern um Lampenbetriebsgeräte handelt, deren Ansteuerung im Hinblick auf die Berücksichtigung des Tageslichts optimiert werden kann. Hierbei ist vorgesehen, dass vorzugsweise wiederum durch die Sensoreinheit gemeinsam mit der Positionsinformation auch eine Tageslichtinformation ermittelt wird. Diese Tageslichtinformation gibt Auskunft darüber, in welcher Weise bspw. das durch ein Fenster einfallende Licht die Helligkeit in dem von der entsprechenden Leuchte zu beleuchteten Bereich beeinflusst. Diese Tageslichtinformation kann dann wiederum an das Lampenbetriebsgerät übermittelt werden, wobei während des späteren Betriebs des Systems entweder das Lampenbetriebsgerät empfangene Befehle unter Berücksichtigung dieser Tageslichtinformation umsetzt oder an die Lampenbetriebsgeräte übermittelte Befehle bereits unter Berücksichtigung dieser Tageslichtinformation generiert werden. In diesem Fall kann also für jede einzelne Leuchte individuell berücksichtigt werden, inwiefern sich das Tageslicht auf den zu beleuchtenden Bereich auswirkt. Die Lichtabgabe unter Berücksichtigung des Tageslichts kann in diesem Fall insbesondere ohne entsprechende Regelungen und dem damit verbundenen Einsatz einer Vielzahl von Helligkeitssensoren optimal berücksichtigt werden, was insbesondere auch im Hinblick auf eine Energieersparnis durch das Beleuchtungssystem von großem Vorteil ist.

Das Übermitteln der Positionsinformationen und ggf. der Tageslichtinformationen jeweils an den Verbraucher kann insbesondere drahtlos, vorzugsweise durch eine sogenannte Nahfeldkommunikation erfolgen. Gegebenenfalls wäre allerdings auch eine vorübergehende Verbindung mit Hilfe eines Kabels zwischen dem Verbraucher und der Sensoreinheit denkbar. Eine drahtlose Informationsübermittlung ist allerdings selbstverständlich insbesondere dann von Vorteil, wenn die Leuchten beziehungsweise allgemein die Verbraucher nur schwer zugänglich sind, beispielsweise an der Decke höherer Räume oder Hallen angeordnet sind.

Die Sensoreinheit selbst sollte in der Lage sein, die Position möglichst exakt ermitteln zu können. Dies stellt zunächst kein Problem dar, wenn sich der Verbraucher außerhalb geschlossener Räume befindet und dementsprechend eine Positionsbestimmung mittels GPS möglich ist. Da das erfindungsgemäße Verfahren allerdings insbesondere auch auf Beleuchtungssysteme zur Beleuchtung von Gebäuden oder dergleichen anwendbar sein soll, sollte die Sensoreinheit auch in der Lage sein, die Positionen der Verbraucher innerhalb eines Gebäudes bestimmen zu können. Derartige Technologien stehen allerdings bereits zur Verfügung und beruhen dann auf dem Einsatz unterschiedlichster Sensoren, beispielsweise von Beschleunigungssensoren, Drucksensoren, Gyroskopen und dergleichen. Letztlich muss also dann die Sensoreinheit in entsprechender Nähe des Verbrauchers positioniert werden, um dessen Position zu bestimmen und dann die Information an den Verbraucher weiterzuleiten.

Nachfolgend soll die Erfindung anhand der beiliegenden Zeichnung näher erläutert werden. Es zeigen:
- Figur 1: einen Ausschnitt eines erfindungsgemäß ausgestalteten Beleuchtungssystems;
- Figur 2: schematisch die Ausgestaltung eines Verbrauchers des Beleuchtungssystems;
- Figur 3: den Vorgang der Positionsbestimmung für einen Verbraucher und
- Figuren 4 und 5: zwei Varianten eines erfindungsgemäßen Verfahrens zur Vergabe von Betriebsadressen.

Die Erfindung soll nachfolgend anhand des Beispiels eines größeren Beleuchtungssystems zum Beleuchten eines Gebäudes erläutert werden. Anzumerken ist allerdings, dass die Erfindung keinesfalls auf Steuerungssysteme für Lampenbetriebsgeräte bzw. Leuchten beschränkt ist. Beispielsweise könnte die erfindungsgemäße Lösung generell bei Hausleitsystemen eingesetzt werden, die zum Fernsteuern unterschiedlichster Geräte vorgesehen sind. Unter den Begriff Verbraucher fallen also neben Lampenbetriebsgeräten bspw. auch Jalousien, Heizungs- bzw. Klimageräte und/oder Überwachungseinrichtungen.

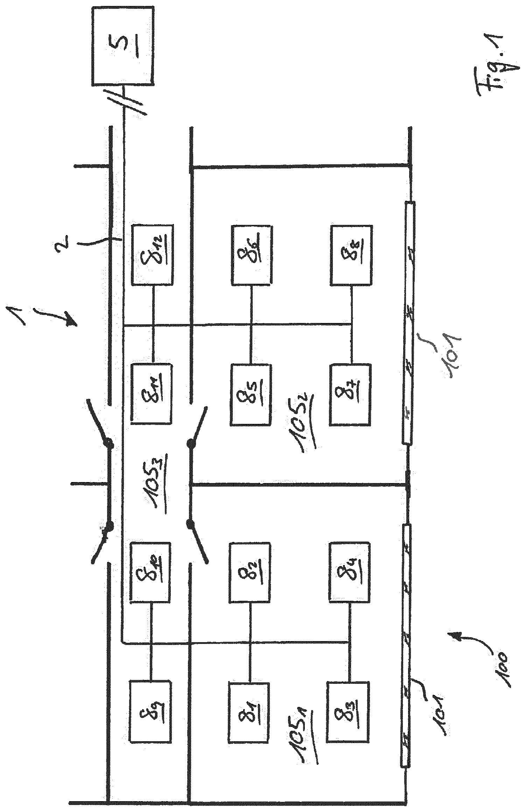

Als Anwendungsbeispiel für das erfindungsgemäße Verfahren ist in Figur 1 auszugsweise ein Gebäude 100 dargestellt, in dem also ein Beleuchtungssystem 1 zum Einsatz kommt, welches mehrere Leuchten 8₁ - 8₁₂ aufweist, die verteilt in verschiedenen Räumen des Gebäudes 100 angeordnet sind. Insbesondere zeigt der dargestellte Ausschnitt des Gebäudes 100 zwei Räume 105₁ und 105₂, in denen jeweils vier Leuchten 8₁ - 8₄ bzw. 8₅ - 8₈ angeordnet sind. Beide Räume 105₁ und 105₂ sind über einen Gang 105₃ miteinander verbunden, entlang dem ebenfalls eine Beleuchtung mit Hilfe von hier vier dargestellten weiteren Leuchten 8₉ - 8₁₂ realisiert werden soll. Alle Leuchten 8₁ - 8₁₂ sind über ein gemeinsames Bussystem 2 mit einer zentralen Steuereinheit 5 verbunden, wobei im vorliegenden Fall davon ausgegangen wird, dass über das Bussystem 2 zwischen dem zentralen Befehlsgeber 5 und den Leuchten 8₁ - 8₁₂, genauer gesagt zwischen dem Befehlsgeber 5 und den Betriebsgeräten der Leuchten 8₁ - 8₁₂ eine Kommunikation entsprechend dem DALI-Standard erfolgt. Selbstverständlich könnte allerdings auch jegliche andere Art von Kommunikation vorgesehen sein, sofern die Möglichkeit besteht, dass durch die Nutzung entsprechender Adressen ein individueller Datenaustausch zwischen dem zentralen Befehlsgeber 5 und den einzelnen Leuchten 8₁ - 8₁₂ ermöglicht wird. Nicht dargestellt sind im vorliegenden Anwendungsbeispiel die weiteren Leitungen zur Stromversorgung der Leuchten 8₁ - 8₁₂, wobei selbstverständlich auch denkbar wäre, den Datenaustausch zwischen dem zentralen Befehlsgeber 5 und den Leuchten 8₁ - 8₁₂ über das Stromversorgungsnetz selbst im Rahmen einer sogenannten Powerline Communication vorzunehmen.

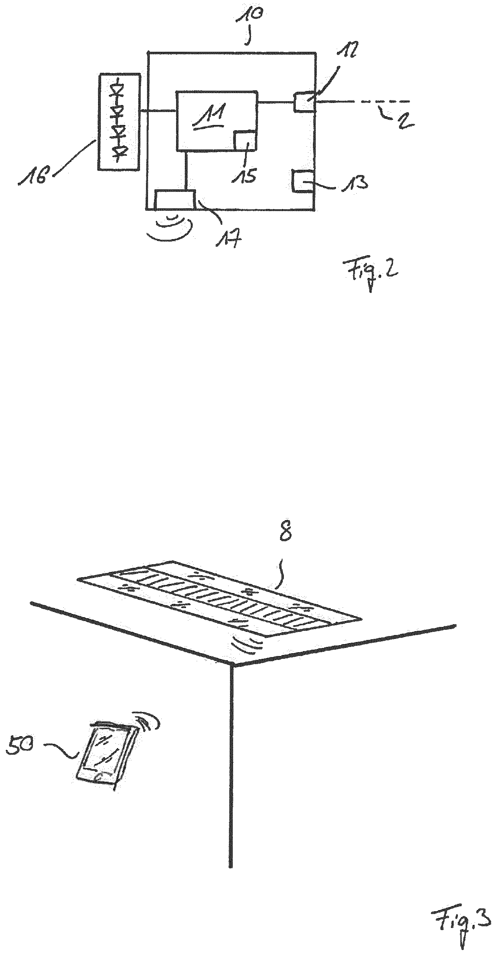

Wie bei den Beleuchtungssystemen, von denen die vorliegende Erfindung ausgeht, ist auch im vorliegenden Fall vorgesehen, den einzelnen Betriebsgeräten der Leuchten 8₁ - 8₁₂ Betriebsadressen zuzuweisen, über welche diese dann im späteren Betrieb des Systems 1 Befehle erhalten können, über welche beispielsweise die Helligkeit eingestellt wird oder die Leuchten 8₁ - 8₁₂ generell ein- oder ausgeschaltet werden. Jeder Verbraucher bzw. jedes Lampenbetriebsgerät 10 weist dementsprechend gemäß der Darstellung von Figur 2 eine Steuereinheit 11 auf, welche mit einer Sende- und Empfangseinheit bzw. einer Schnittstelle 12 verbunden ist, über welche ein Anschluss an die Busleitung 2 und der Datenaustausch erfolgt. In einem Speicher 15 der Steuereinheit 11 bzw. des Lampenbetriebsgeräts 10 ist eine entsprechende Adressinformation abgelegt, so dass der Verbraucher 10 erkennen kann, ob ein auf der Busleitung 2 eintreffendes Steuersignal für ihn bestimmt ist oder nicht. Eintreffende Befehle werden dann in der Steuereinheit 11 in entsprechender Weise verarbeitet. Dies bedeutet insbesondere, dass die über den Stromversorgungsanschluss 13 zur Verfügung gestellte Versorgungsspannung in einen geeigneten Strom zum Betreiben der Lichtquelle 16, die hier in Form mehrerer LEDs realisiert ist, umgesetzt wird. Die in dem Speicher 15 des Verbrauchers 10 abgelegte Betriebsadresse berücksichtigt dabei insbesondere auch die Position des Verbrauchers 10 innerhalb des Gebäudes 1, um eine effiziente und anschauliche Ansteuerung der Leuchten 8₁ - 8₁₂ zu ermöglichen. Insbesondere kann im Rahmen dieser Betriebsadresse auch eine Gruppenzugehörigkeit definiert werden, um beispielsweise alle Leuchten innerhalb eines Raums einheitlich anzusteuern.

Das Zuweisen der Betriebsadresse erfolgte, wie eingangs beschrieben, bislang beispielsweise dadurch, dass in einem ersten Schritt alle Verbraucher sich gegenüber dem zentralen Befehlsgeber über eine individuelle Ursprungsadresse identifizierten. Anschließend wurden die Verbraucher nacheinander dazu aufgefordert, ein optisches Signal abzugeben, wobei dann durch entsprechendes Personal zur Inbetriebnahme des Systems festgestellt werden musste, an welcher Position sich die aktuell identifizierende Leuchte befindet. Diese Information musste dann an die Zentrale zurückgemeldet werden und wurde beim Zuweisen der entsprechenden Betriebsadresse für diese Leuchte berücksichtigt.

Mit der erfindungsgemäßen Lösung kann diese verhältnismäßig aufwendige Prozedur deutlich vereinfacht werden. Entsprechend der Darstellung von Figur 3 besteht hierbei der erfindungsgemäße Gedanke darin, vorab die Position des Verbrauchers, hier also der Leuchte 8 bzw. des Lampenbetriebsgeräts 10 zu ermitteln und diese in dem Speicher 15 des Lampenbetriebsgeräts 10 abzulegen. Die Positionsinformation kann dann unmittelbar an den zentralen Befehlsgeber übermittelt und beim Zuweisen der Betriebsadresse berücksichtigt werden. Das mühselige Auffinden einer gerade ein optisches Signal abgebenden Leuchte kann in diesem Fall also entfallen.

Figur 3 zeigt beispielhaft eine an der Decke eines Raums befindliche Leuchte 8, deren Position mit Hilfe einer erfindungsgemäßen Sensoreinheit 50 ermittelt wird. Diese Sensoreinheit 50 wird hierzu in der Nähe der Leuchte 8 positioniert und ist in der Lage, drahtlos mit dem Betriebsgerät 10 der Leuchte 8 zu kommunizieren. Denkbar wäre z.B. eine Verbindung entsprechend dem Bluetooth-Standard, wobei vorzugsweise eine sogenannte Nahfeldkommunikation (NFC) zum Einsatz kommt. Das heißt, bei entsprechend naher Platzierung der Sensoreinheit 50 an der Leuchte 8 wird unmittelbar eine Verbindung zwischen beiden Einheiten aufgebaut, unabhängig davon, ob sich weitere Leuchten in dem Raum befinden oder nicht. Entsprechend der Darstellung von Figur 2 weist dementsprechend ein erfindungsgemäß ausgestaltetes Lampenbetriebsgerät 10 zusätzlich Mittel zur drahtlosen Kommunikation 17 auf.

Die Sensoreinheit 50 ist vorzugsweise als tragbares Gerät, z.B. als Smartphone ausgeführt und muss in der Lage sein, möglichst genau die Position der Leuchte 8 bestimmen zu können. Genau genommen ermittelt die Sensoreinheit 50 die eigene Position und überträgt diese dann an die Leuchte 8 bzw. das Lampenbetriebsgerät 10, weshalb die Sensoreinheit 50 ausreichend nah an der Leuchte 8 und vorzugsweise jeweils in definierter Orientierung bzw. Ausrichtung hierzu platziert werden sollte. Demzufolge muss also die Sensoreinheit 50 in der Lage sein, möglichst genau eine Positionsbestimmung durchführen zu können. Dies stellt zunächst dann kein Problem dar, wenn die Sensoreinheit 50 außerhalb geschlossener Gebäude angeordnet wird, da hierbei beispielsweise eine Positionsbestimmung über GPS erfolgen kann. Für den primären Anwendungsfall der Nutzung innerhalb von Räumen oder Gebäuden müssen allerdings zusätzlich weitere Sensoren zum Einsatz kommen, über welche eine Positionsbestimmung erfolgen kann. Aus dem Stand der Technik ist hierbei insbesondere bekannt, zusätzlich zu den GPS-Informationen auch die Informationen weiterer Sensoren, insbesondere von Beschleunigungssensoren, Drucksensoren, Gyroskopen und dergleichen zu verwenden. Derartige Mittel sind aus dem Stand der Technik bereits bekannt und können hier in entsprechender Weise zum Einsatz kommen.

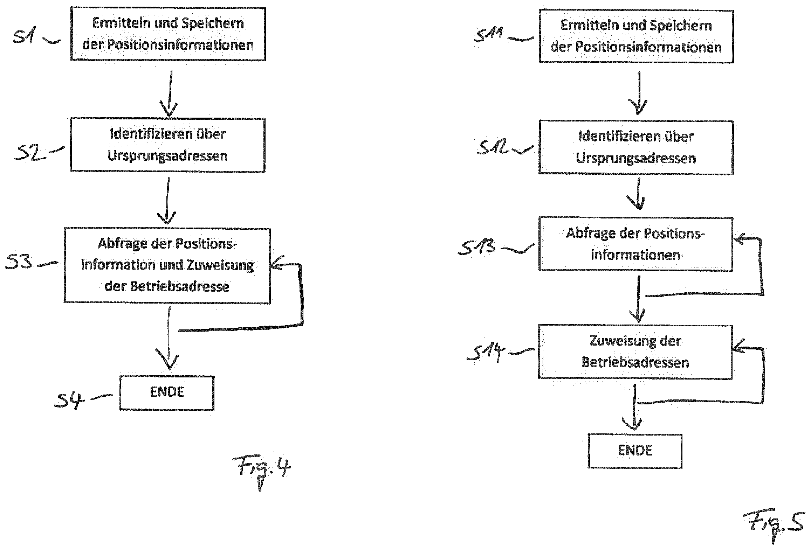

Ein auf Basis der vorliegenden Erfindung modifiziertes Verfahren zur Vergabe von Betriebsadressen für Leuchten eines größeren Beleuchtungssystems könnte dann entsprechend dem Diagramm von Figur 4 wie folgt ablaufen:
In einem ersten Schritt S1 wird mit Hilfe der Sensoreinheit die Position jedes Verbrauchers bestimmt und in dessen Speicher abgelegt. Wie bereits erwähnt, erfolgt dies vorzugsweise dadurch, dass die Sensoreinheit in unmittelbarer Nähe der jeweiligen Leuchte positioniert wird und die dabei erfasste Position über Nahfeldkommunikation drahtlos an die Leuchte beziehungsweise deren Lampenbetriebsgerät übermittelt wird, welches dann diese Information in dem Speicher ablegt.

In einem darauffolgenden Schritt S2 fordert der zentrale Befehlsgeber alle Verbraucher des Systems - wie auch bislang - dazu auf, sich zu identifizieren. Im Rahmen unterschiedlicher Algorithmen, welche aus dem Stand der Technik bekannt sind, übermitteln dann die Lampenbetriebsgeräte ihre Ursprungs- oder Zufallsadressen an den zentralen Befehlsgeber, so dass dieser intern eine vollständige Liste aller angeschlossener Verbraucher mit ihren Ursprungs- bzw. Zufallsadressen besitzt und damit in der Lage ist, jedes Lampenbetriebsgerät einzeln zu kontaktieren.

Im darauffolgenden Schritt S3 kontaktiert dann der Zentralbefehlsgeber mit Hilfe der ihm zur Verfügung stehenden Ursprungs- bzw. Zufallsadressen einen einzelnen Verbraucher und fordert diesen dazu auf, die in ihm abgespeicherte Positionsinformation zu übermitteln. Auf Basis dieser Positionsinformation vergibt dann der Befehlsgeber eine Betriebsadresse und übermittelt diesen an den Verbraucher, welcher diese für den späteren Betrieb ebenfalls speichert. Diese Betriebsadresse berücksichtigt dabei insbesondere die Position der Leuchte innerhalb des Gebäudes und kann z.B. auch eine Gruppenzugehörigkeit beinhalten, um später ein logisches Ansteuern der einzelnen Leuchten zu ermöglichen. Dieser Schritt S3 wird so lange wiederholt, bis jedem Verbraucher eine Betriebsadresse zugewiesen wurde. Sobald dies erfolgt ist, ist das System einsatzbereit, d.h., dass nunmehr die Leuchten unter den ihnen zugewiesenen Betriebsadressen kontaktiert und angesteuert werden können.

Die Schilderung des Verfahrens zeigt, dass hier das Vergeben der Betriebsadressen äußerst einfach und effizient durchgeführt werden kann. Insbesondere ist es nicht mehr erforderlich, eine einzeln über die Ursprungsadresse kontaktierte Leuchte, welche sich über ein optisches Signal identifiziert, zu suchen und dem zentralen Befehlsgeber dessen Position mitzuteilen. Das Verfahren gemäß der vorliegenden Erfindung führt also deutlich schneller zu dem angestrebten Ergebnis, nämlich den Leuchten sinnvolle Betriebsadressen zuzuweisen.

Eine alternative Variante der erfindungsgemäßen Verfahrens von Figur 4 ist in Figur 5 dargestellt, wobei auch hier in einem ersten Schritt S11 wie auch in dem Schritt S1 die Positionen der Leuchten bzw. Verbraucher bestimmt und in deren Speichern abgelegt werden. Auch der darauffolgende Schritt S12, in dessen Rahmen alle Verbraucher sich über ihre Ursprungs- bzw. Zufallsadressen bei dem zentralen Befehlsgeber melden, ist identisch zu dem zuvor beschriebenen Schritt S2.

Im darauffolgenden Schritt S13 werden wiederum die Verbraucher einzeln über ihre Ursprungs- bzw. Zufallsadressen kontaktiert und deren Positionsinformationen durch den zentralen Befehlsgeber abgefragt. Es erfolgt hier nun allerdings nicht unmittelbar eine Vergabe der Betriebsadresse. Stattdessen werden zunächst alle Verbraucher hinsichtlich ihrer Positionen abgefragt, bis die vollständigen Informationen dem zentralen Befehlsgeber vorliegen. Erst in einem darauffolgenden Schritt S14 werden dann auf Basis dieser Positionsinformationen Betriebsadressen festgelegt und einzeln an alle Verbraucher übermittelt, womit das Verfahren wiederum beendet ist.

Der Vorteil dieser zweiten Variante besteht darin, dass vor Vergabe der eigentlichen Betriebsadressen zunächst die Positionen aller Leuchten ermittelt werden und somit dem zentralen Befehlsgeber bekannt sind. Diese vollständigen Informationen hinsichtlich der Anordnungen der Leuchten innerhalb des Gebäudes können unter Umständen zu einer sinnvolleren Betriebsadressvergabe führen, da unmittelbar erkennbar ist, welche Leuchten sich in Nähe zueinander befinden und dementsprechend beispielsweise einer gemeinsamen Gruppe zugeordnet werden sollten. Denkbar wäre in diesem Zusammenhang auch, dass nach Sammeln aller Positionsinformationen durch den zentralen Befehlsgeber zunächst eine grafische Darstellung der Anordnung der Leuchten in dem Gebäude erfolgt, wobei dann unterstützt durch diese grafische Darstellung ein menschlicher Benutzer eine Gruppierung der Leuchten vornimmt und Betriebsadressen definiert. In gleicher Weise könnte allerdings auf Basis der Positionsinformationen auch unmittelbar automatisch durch den Befehlsgeber eine Festlegung der Betriebsadressen erfolgen.

Als weitere Variante zu dem Verfahren von Figur 5 wäre auch denkbar, die Schritte S12 und S13 zusammenzufassen. Dabei könnte also vorgesehen sein, dass im Rahmen des Identifizierens die Verbraucher nicht nur die Ursprungs- bzw. Zufallsadressen übermitteln sondern gleichzeitig auch die Positionsinformationen an den zentralen Befehlsgeber schicken. Denkbar wäre sogar, dass die Positionsinformation selbst die Ursprungsadresse darstellt, sofern sichergestellt ist, dass zwei Verbraucher nicht eine identische Position aufweisen.

Eine besondere Weiterbildung der erfindungsgemäßen Lösung bietet sich insbesondere dann an, wenn es sich - wie bei dem Ausführungsbeispiel von Figur 1 - bei den Verbrauchern um Lampenbetriebsgeräte handelt. Eine (energie-)effiziente Steuerung eines Beleuchtungssystems sollte dabei immer auch den Einfluss des durch Fenster in das Gebäude einfallenden Lichts berücksichtigen. Bei dem Beispiel von Figur 1, bei dem beispielhaft für die Räume 105₁ und 105₂ Fensterfronten 101 eingezeichnet sind, sollte sich offensichtlich der Einfluss des Tageslichts für die vorderen Leuchten 8₃, 8₄, 8₇ und 8₈ stärker auswirken als für die von den Fenstern 101 entfernteren Leuchten 8₁, 8₂, 8₅ und 8₆. D.h., wenn die Räume 105₁ und 105₂ in einer bestimmten Helligkeit beleuchtet werden sollen, so können aufgrund des Einflusses des Tageslichts die näher an den Fenstern 101 befindlichen Leuchten mit niedrigerer Helligkeit betrieben werden als die davon entfernter angeordneten Leuchten.

Für eine derartige sog. Tageslichtsteuerung wird nach derzeitigem Stand der Technik pro Etage, Fassade bzw. Leuchtenreihe jeweils eine sog. Tageslichtmessung durchgeführt, bei der der Einfluss des Aussenlichts ermittelt wird. Entsprechend diesen Messungen werden dann den Leuchten nach der Zuweisung ihrer Betriebsadresse sog. Tageslichtquotienten zugewiesen. Kombiniert mit den Werten eines außerhalb des Gebäudes befindlichen sog. Tageslichtmesskopfs wird dann der eigentliche Stellwert zum Betreiben der Leuchte bestimmt.

Gemäß der besonders bevorzugten Weiterbildung der Erfindung ist nunmehr vorgesehen, dass - vorzugsweise wiederum - mit Hilfe der Sensoreinheit 50, über welche die Positionen der Leuchten bzw. allgemein der Verbraucher bestimmt werden, jeweils auch Tageslichtmesswerte erfasst werden. D.h., die Sensoreinheit 50 weist zusätzlich zu den Sensoren für die Positionsbestimmung auch Mittel zur Tageslichtmessung auf. Der jeweils gemeinsam mit der Positionsinformation bestimmte Tageslichtmesswert wird dann wiederum über Nahfeldkommunikation bzw. über ein Kabel an das zugehörige Lampenbetriebsgerät ermittelt und dort gespeichert.

Die jeder Leuchte individuell zugeordnete Tageslichtinformation kann dann während des späteren Betriebs des Beleuchtungssystems berücksichtigt werden. Dies kann entweder dadurch erfolgen, dass das zugehörige Betriebsgerät selbst auf Basis dieser Tageslichtinformation den oben genannten Tageslichtquotienten bestimmt und eintreffende Steuerbefehle ggf. unter ergänzender Berücksichtigung der Informationen des Tageslichtmesskopfs in entsprechender Weise, also geeignete Stellwerte umsetzt, um die zugehörige Lichtquelle anzusteuern. Alternativ hierzu könnte das Lampenbetriebsgerät gemeinsam mit der Positionsinformation auch die Tageslichtinformation an die Zentrale übermitteln. Diese kann dann diese Tageslichtinformation beim Übermitteln entsprechender Steuerbefehle an die Lampenbetriebsgeräte bereits berücksichtigen. Das Übermitteln der Tageslichtinformation an die Zentrale ist dabei insofern von Vorteil, als dies wiederum bei der oben erwähnten graphischen Darstellung des Gebäudes mit dem Beleuchtungssystem berücksichtigt werden kann. D.h., es können nicht nur die Positionen der einzelnen Leuchten dargestellt, sondern auch der jeweilige Einfluss des Tageslichts erkennbar gemacht werden. Gleichzeitig führt diese Weiterbildung auch zu einer Optimierung der Tageslichtsteuerung im Vergleich zu bislang bekannten Lösungen, da nun nicht mehr nur lediglich für einzelne Leuchtenreihen gemittelt eine Tageslichtinformation ermittelt wird sondern für jede Leuchte individuell der Einfluss des Aussenlichts berücksichtigt wird.

Letztendlich kann also mit dem erfindungsgemäßen Verfahren eine Inbetriebnahme eines größeren Steuerungssystems deutlich effizienter und einfacher erfolgen. Dabei ist die Erfindung auch nicht unbedingt auf Steuerungssysteme für innerhalb von Gebäuden angeordnete Verbraucher beschränkt. In gleicher Weise könnte das Verfahren auch bei außerhalb von Gebäuden befindlichen Verbrauchern, beispielsweise bei Leuchten zur Straßenbeleuchtung oder dergleichen zum Einsatz kommen. Ferner ist die Erfindung auch nicht auf Systeme beschränkt bei denen die Verbraucher über eine Bus- oder Steuerleitung mit dem zentralen Befehlsgeber verbunden sind, sondern könnte z.B. auch dann zum Einsatz kommen, wenn die Kommunikation zwischen den Teilnehmern des Systems drahtlos - z.B. per Funk oder mit Hilfe von Infrarotsignalen - erfolgt.

## Patentansprüche

1. Verfahren zur Inbetriebnahme eines Steuerungssystem (1) für mehrere verteilt angeordnete Verbraucher (10), insbesondere für Lampenbetriebsgeräte,
wobei die Verbraucher (10) mit einem zentralen Befehlsgeber (5) des Steuerungssystems (1) verbunden sind, **dadurch gekennzeichnet, dass** zwischen dem zentralen Befehlsgeber (5) und den Verbrauchern (10) eine Kommunikation entsprechend dem DALI-Standard erfolgt, und wobei die Verbraucher (10) dazu ausgebildet sind, sich gegenüber dem zentralen Befehlsgeber (5) mit Hilfe einer individuellen Ursprungs- bzw. Zufallsadresse zu identifizieren,
wobei mit Hilfe einer tragbaren Sensoreinheit (50) eine die Anordnung bzw. Position des Verbrauchers (10) betreffende Positionsinformation ermittelt wird und die Positionsinformation von der Sensoreinheit (50) an den Verbraucher (10) übermittelt und von diesem gespeichert wird,
wobei der zentrale Befehlsgeber (5) im Rahmen einer Initialisierung des Steuerungssystems (1) die Verbraucher (10) dazu auffordert, sich mit Hilfe ihrer jeweiligen individuellen Ursprungs- bzw. Zufallsadresse zu identifizieren, wobei
• die Verbraucher die Ursprungs- bzw. Zufallsadresse, die zumindest teilweise die in dem Verbraucher (10) gespeicherte Positionsinformation beinhaltet, übermitteln oder
• die Verbraucher (10) gemeinsam mit ihrer Ursprungs- bzw. Zufallsadresse die Positionsinformation an den zentralen Befehlsgeber übermitteln oder
• die Verbraucher (10) nach Übermittlung der Ursprungs- bzw. Zufallsadresse bei anschließender Kontaktierung durch den Befehlsgeber (5) über die Ursprungs- bzw. Zufallsadresse die Positionsinformation an den zentralen Befehlsgeber übermitteln,
und wobei durch den zentralen Befehlsgeber (5) auf Basis der Positionsinformationen den Verbrauchern (10) Betriebsadressen entsprechend dem DALI-Standard zugewiesen werden.

2. Verfahren nach Anspruch 1,
**dadurch gekennzeichnet,**
**dass** zum Ermitteln der Positionsinformation die Sensoreinheit (50) in der Nähe des entsprechenden Verbrauchers (10) positioniert und die Position der Sensoreinheit (50) bestimmt wird.

3. Verfahren nach Anspruch 1 oder 2,
**dadurch gekennzeichnet,**
**dass** zentrale Befehlsgeber (5) dazu ausgebildet ist, auf Basis der gesammelten Positionsinformationen eine graphische Darstellung der Anordnung der Verbraucher (10) zur Verfügung zu stellen.

4. Verfahren nach einem der vorherigen Ansprüche,
**dadurch gekennzeichnet,**
**dass** die Positionsinformationen drahtlos oder mit Hilfe eines Kabels an die Verbraucher (10) übermittelt werden.

5. Verfahren nach einem der vorherigen Ansprüche,
**dadurch gekennzeichnet,**
**dass** es sich bei den Verbrauchern (10), die Teil des Steuerungssystems (1) sind, um Lampenbetriebsgeräte handelt und gemeinsam mit der Positionsinformation - vorzugsweise ebenfalls durch die Sensoreinheit (50) - eine Tageslichtinformation ermittelt und an das Lampenbetriebsgerät übermittelt wird, wobei während des Betrieb des Systems
• eine Umsetzung empfangener Befehle durch die Lampenbetriebsgeräte unter Berücksichtigung der Tageslichtinformation erfolgt oder
• an die Lampenbetriebsgeräte übermittelte Befehle unter Berücksichtigung der Tageslichtinformation generiert werden.

6. Steuerungssystem (1) mit mehreren verteilt angeordneten Verbrauchern (10), insbesondere Lampenbetriebsgeräten, einer tragbaren Sensoreinheit und mindestens einem zentralen Befehlsgeber (5), der mit jedem Verbraucher (10) verbunden ist, vorzugsweise über eine Steuerleitung (2), **dadurch gekennzeichnet, dass** zwischen dem zentralen Befehlsgeber (5) und den Verbrauchern (10) eine Kommunikation entsprechend dem DALI-Standard erfolgt und die Verbraucher (10), die tragbare Sensoreinheit und der zentrale Befehlsgeber dazu ausgebildet sind, das Verfahren zur Inbetriebnahme des Steuerungssystem (1) nach einem der vorherigen Ansprüche durchzuführen.

## Claims

1. A method for putting into operation a control system (1) for a plurality of loads (10) with a distributed arrangement, in particular, for lamp-operating devices, wherein the loads (10) are connected to a central command generator (5) of the control system (1), **characterized in that** between the central command generator (5) and the loads (10) a communication takes place according to the DALI standard, and wherein the loads (10) are designed to identify themselves to the central command generator (5) with the aid of an individual originating- or random address,
wherein with the aid of a portable sensor unit (50) positional information relating to the arrangement or position of the load (10) is determined and the positional information is transmitted by the sensor unit (50) to the load (10) and is stored by the same,
wherein the central command generator (5) as part of an initialization of the control system (1) requests the loads (10) to identify themselves with the aid of their respective individual originating- or random address, wherein
• the loads transmit the originating- or random address, which includes at least partially the positional information stored in the load (10) or
• the loads (10) transmit together with their originating- or random address the positional information to the central command generator or
• the loads (10) after transmission of the originating- or random address when subsequently contacted by the command generator (5) via the originating- or random address transmit the positional information to the central command generator (5),
and wherein the loads (10) are assigned operating addresses according to the DALI standard by the central command generator (5) on the basis of positional information.

2. A method according to Claim 1,
**characterized in**
**that** for determining the positional information the sensor unit (5) is positioned in the vicinity of the appropriate load (10) and the position of the sensor unit (50) is determined.

3. A method according to Claim 1 or 2,
**characterized in**
**that** the central command generator (5) is designed to make available a graphic representation of the arrangement of the loads (10) on the basis of the positional information collected.

4. A method according to any one of the preceding claims,
**characterized in**
**that** the positional information is transmitted wirelessly or with the aid of a cable to the loads (10).

5. A method according to any one of the preceding claims,
**characterized in**
**that** the loads (10), which are part of the control system (1), are lamp-operating devices and together with the positional information - preferably also by the sensor unit (50) - daylight information is determined and is transmitted to the lamp-operating device, wherein during the operation of the system
• an implementation of received commands is carried out by the lamp-operating device based on the daylight information or
• commands transmitted to the lamp-operating device are generated based on the daylight information.

6. A control system (1) with a plurality of loads (10) with a distributed arrangement, in particular, lamp-operating devices, a portable sensor unit and at least one central command generator (5), which is connected with each load (10), preferably via a control line (2),
**characterized in**
**that** between the central command generator (5) and the loads (10) a communication takes place according to the DALI standard and the loads (10), the portable sensor unit and the central command generator are designed to implement the method for putting into operation the control system (1) according to any one of the preceding claims.

## Revendications

1. Procédé de mise en marche d'un système de commande (1) pour plusieurs consommateurs (10) disposés de façon répartie, en particulier pour des appareillages de lampe, les consommateurs (10) étant raccordés à un émetteur d'ordres (5) central du système de commande (1), **caractérisé en ce que**, entre l'émetteur d'ordres (5) central et les consommateurs (10), une communication est effectuée conformément au standard DALI, et les consommateurs (10) étant constitués pour s'identifier vis-à-vis de l'émetteur d'ordres (5) central à l'aide d'une adresse source ou respectivement aléatoire individuelle,
une information de position concernant la disposition ou respectivement position du consommateur (10) étant déterminée à l'aide d'une unité de capteur (50) portative, et l'information de position étant transmise de l'unité de capteur (50) au consommateur (10) et étant enregistrée par celui-ci,
l'émetteur d'ordres (5) central ordonnant aux consommateurs (10), dans le cadre d'une initialisation du système de commande (1), de s'identifier à l'aide de leur adresse source ou respectivement aléatoire individuelle respective,
• les consommateurs transmettant l'adresse source ou respectivement aléatoire qui contient au moins partiellement l'information de position enregistrée dans le consommateur (10), ou
• les consommateurs (10) transmettant conjointement avec leur adresse source ou respectivement aléatoire l'information de position à l'émetteur d'ordres central, ou
• les consommateurs (10), après la transmission de l'adresse source ou respectivement aléatoire, lors de la mise en contact ultérieure par l'émetteur d'ordres (5), transmettant l'information de position à l'émetteur d'ordres central par le biais de l'adresse source ou respectivement aléatoire,
et des adresses de service conformément au standard DALI étant attribuées aux consommateurs (10) par l'émetteur d'ordres (5) central sur la base des informations de position.

2. Procédé selon la revendication 1,
**caractérisé en ce que,**
pour la détermination de l'information de position, l'unité de capteur (50) est positionnée à proximité du consommateur (10) correspondant, et la position de l'unité de capteur (50) est définie.

3. Procédé selon la revendication 1 ou 2,
**caractérisé en ce que,**
l'émetteur d'ordres (5) central est constitué pour, sur la base des informations de position collectées, mettre à disposition une représentation graphique de la disposition des consommateurs (10).

4. Procédé selon l'une des revendications précédentes,
**caractérisé en ce que,**
les informations de position sont transmises aux consommateurs (10) sans fil ou à l'aide d'un câble.

5. Procédé selon l'une des revendications précédentes,
**caractérisé en ce que,**
concernant les consommateurs (10) qui font partie du système de commande (1), il s'agit d'appareillages de lampe, et conjointement avec l'information de position - de préférence également par l'unité de capteur (50) - une information de lumière du jour est déterminée et est transmise à l'appareillage de lampe,
où, pendant le fonctionnement du système,
• une mise en oeuvre d'ordres reçus est effectuée par les appareillages de lampe avec prise en compte de l'information de lumière de jour, ou
• des ordres transmis aux appareillages de lampe sont générés avec prise en compte de l'information de lumière de jour.

6. Système de commande (1) avec plusieurs consommateurs (10) disposés de façon répartie, en particulier des appareillages de lampe, avec une unité de capteur portative et avec au moins un émetteur d'ordres (5) central qui est raccordé à chaque consommateur (10), de préférence par le biais d'une ligne pilote (2),
**caractérisé en ce qu'**une communication est effectuée conformément au standard DALI entre l'émetteur d'ordres (5) central et les consommateurs (10), et les consommateurs (10), l'unité de capteur portative et l'émetteur d'ordres central sont constitués pour réaliser le procédé de mise en marche du système de commande (1) selon l'une des revendications précédentes.
